# EUROPÄISCHE PATENTANMELDUNG

(11) **EP 1 043 548 A2**
(43) Veröffentlichungstag der Anmeldung: **11.10.2000**
(21) Anmeldenummer: 00104627.5
(22) Anmeldetag: 03.03.2000
(51) Int. Cl.: F24D 3/14

(54) **Montageelement zur Befestigung von Wandheizungsmodulen**

(30) Priorität: 08.04.1999 DE 29906280 U
(71) Anmelder: fischerwerke Artur Fischer GmbH & Co. KG, 72178 Waldachtal (DE)
(72) Erfinder: Herbstreit, Rolf, 72178 Waldachtal (DE); Aschaff, Carsten, 91580 Petersaurach (DE)

(57) **Zusammenfassung**

Die Erfindung betrifft ein Montageelement (6, 7) mit Befestigungslasche (9,16) und auf Rohre (2, 3) aufclipsbaren Schellenbügeln (8, 14) zur Befestigung von aus gitterförmig angeordneten Rohren und auf den Rohren auflegendem Streckmetallgitter (4) bestehenden Wandheizungsmodulen (1). Gemäß der Erfindung wird vorgeschlagen, die Schellenbügel starr miteinander zu verbinden und an dem Montageelement (6, 7) wenigstens einen Auflagenoppen (11) mit einer Klemm- bzw. Rastbohrung (12) zum Einstecken eines das Streckmetallgitter (4) haltenden Klemmstiftes (5) anzuordnen. Damit wird erreicht, dass die werkseitige Herstellung der Wandheizungsmodule erleichtert und eine hohe Stabilität der Module zur Vermeidung von Beschädigungen beim Transport und der Montage ermöglicht wird. Gleichzeitig bietet das Montageelement die Möglichkeit, die Heizungsmodule (1) an der Wand zu befestigen.

## Beschreibung

Die Erfindung betrifft ein Montageelement mit Befestigungslasche und auf die Rohre aufclipsbaren Schellenbügeln zur Befestigung von aus gitterförmig angeordneten Rohren und auf den Rohren aufliegendem Streckmetallgitter bestehenden Wandheizungsmodulen.

Aus Energiespargründen und zur Schaffung eines angenehmen, auf Wärmestrahlung beruhenden Raumklimas werden Wandheizsysteme angeboten, die im Wandverputz eingebettet sind. Ein solches Wandheizsystem besteht in der Regel aus mehreren miteinander verbundenen Wandheizungsmodulen, die als Flächenelemente von ca. 1m² ausgebildet sind. Ein solches Wandheizungsmodul besteht aus zwei im Abstand zueinander parallel laufenden Sammelrohren mit ovalem Querschnitt und zwischen diesen beiden zickzack verlaufenden Rohren mit rundem Querschnitt. Auf diesem Rohrgitter ist ein vorzugsweise aus Aluminium bestehendes Streckmetallgitter angeordnet und mit Bandschlaufen befestigt. Das Streckmetallgitter dient einerseits zur Armierung der aufzubringenden Putzschicht und andererseits zur noch besseren Wärmeverteilung an der Wandfläche. Die Befestigung der Heizungsmodule an der Wand erfolgt mit herkömmlichen Rohrschellen. Die Steifigkeit des Heizungsmoduls ergibt sich ausschließlich aus der gitterförmigen Anordnung der Rohre, da das Streckmetall nur mit Bändern am Heizungsmodul befestigt ist. Durch die fehlende starre Verbindung zwischen dem Streckmetall und dem Rohrgitter kann das Streckmetallgitter nicht zur Versteifung des Heizungsmoduls bei-tragen. Die fehlende Steifigkeit erschwert einerseits die Montage und kann beim Transport oder der Montage der Heizungsmodule zu Beschädigungen des vorgefertigten Heizungsmoduls insbesondere zu Rissen an den Verbindungsstellen der Rohre führen.

Der Erfindung liegt die Aufgabe zugrunde, ein Montageelement zu schaffen, das die werksseitige Herstellung der Wandheizungsmodule erleichtert und eine hohe Stabilität der Module zur Vermeidung von Beschädigungen beim Transport und der Montage ermöglicht und gleichzeitig als Befestigungselemente für die Wandmontage der Heizungsmodule verwendbar sind.

Die Lösung dieser Aufgabe wird durch die im Anspruch 1 angegebenen Merkmale erreicht. Mit den beiden starr miteinander verbundenen Schellenbügeln wird das Montageelement auf die Rohre aufgeclipst. Damit wird bereits eine Aussteifung des Rohrgitters erreicht. Auf dieses Rohrgitter wird anschließend ein der Fläche des Rohrgitters entsprechendes Streckmetallgitter aufgelegt und mit den in die Klemm- bzw. Rastbohrungen der Auflagenocken passenden Klemmstifte befestigt. Damit ergibt sich eine weitere Versteifung des Heizungsmoduls, so dass Verschiebungen des Rohrgitters beim Transport und bei der Montage, die zu Beschädigungen des Moduls führen könnten, vermieden sind. Die Befestigungslaschen aufweisenden Montageelemente dienen gleichzeitig auch zur Wandbefestigung der Heizungsmodule mittels Dübel, Schrauben, Nägel oder dgl.. Zur Erhöhung der Verwindungssteifigkeit der im Spritzgießverfahren aus Kunststoff hergestellten Montageelemente sind die Auflagenocken für die Befestigung des Streckmetallgitters über Stege mit den Schellenbügeln verbunden.

Die Erfindung wird nachfolgend anhand in der Zeichnung dargestellter Ausführungsbeispiele näher erläutert. Es zeigen:

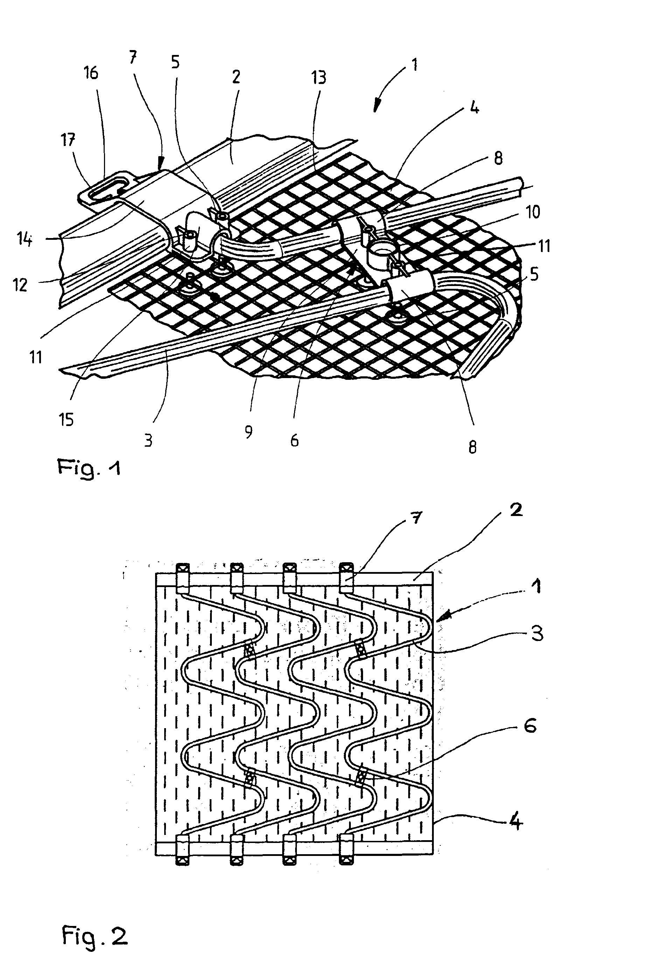

- Figur 1: einen Detailausschnitt des Heizungsmoduls mit zwei Ausführungsformen des Montageelements
- Figur 2: ein komplettes Heizungsmodul

Das Heizungsmodul wird durch gitterförmig angeordnete Rohre 2, 3 gebildet, auf denen ein Streckmetallgitter 4 aufgelegt und mit Klemmstiften 5 an den Montageelementen 6, 7 befestigt ist. Das Rohrgitter besteht aus zwei parallel und im Abstand zueinander angeordneten Sammelrohren 2 mit einem größeren ovalen Querschnitt und zwischen diesen beiden Rohren 2 zickzackförmig angeordneten Rohren 3 mit kreisrundem Querschnitt. Das komplette Heizungsmodul 1 weist eine Fläche von ca. 1 m² auf und ist durch Anschluss weiterer Heizungsmodule an den Sammelrohren 2 in Längsrichtung erweiterbar.

Zur Aussteifung des Rohrgitters werden auf die Rohre 3 an Stellen, an denen zwei Rohre parallel laufen, Montageelemente 6 mit ihren Schellenbügeln 8 aufgeclipst. Der Clipseffekt wird dadurch erreicht, dass die Schellenbügel 8 den Halbmesser der Rohre 3 geringfügig übergreifen. Die beiden Schellenbügel 8 befinden sich beidseitig der Befestigungslasche 9, die in der Mitte eine Befestigungsöse 10 zur Aufnahme einer Schraube mit ihrem Schraubenkopf aufweist. Zwischen der Befestigungsöse 10 und den beiden Schellenbügeln 8 sind Auflagenocken 11 mit Klemm- bzw. Rastbohrungen 12 angeordnet, in die die Klemmstifte 5 zur Fixierung des Streckmetallgitters 4 eingedrückt werden. Das Streckmetallgitter 4 ist in der Weise zugeschnitten, dass seine Längsränder 13 an der Innenseite der Sammelrohre 2 anliegen.

Bei dem Montageelement 7 sind die beiden Schellenbügel 14, 15 in der Weise angeordnet, dass sie im rechten Winkeln zueinander stehen. Damit wird insbesondere die Verbindungsstelle des Rohres 3 an das Rohr 2 gegen Abknicken geschützt. Die an dem Montageelement 7 angeordnete Befestigungslasche 16 mit einem Langloch 17 ermöglicht zur Montageerleichterung das Heizungsmodul 1 an einer in der Wand verankerten Schraube (nicht dargestellt) aufzuhängen und in Längsrichtung der Sammelrohre 2 zur Verbindung mit weiteren Heizungsmodulen in geringem Umfang axial zu verschieben. Nachdem die Sammelrohre 2 der Heizungsmodule 1 miteinander verbunden und verlötet sind, werden die Heizungsmodule durch Festziehen der Schrauben an den Montageelementen 6, 7 an die Wand befestigt. Danach wird die Gipsschicht aufgebracht, wobei das Streckmetallgitter 4 zur Armierung der Putzschicht dient.

## Patentansprüche

1. Montageelement mit Befestigungslasche und auf die Rohre aufclipsbaren Schellenbügeln zur Befestigung von aus gitterförmig angeordneten Rohren und auf den Rohren aufliegendem Streckmetallgitter bestehenden Wandheizungsmodulen, **dadurch gekennzeichnet**, dass die Schellenbügel starr miteinander verbunden sind und dass an dem Montageelement (6, 7) wenigstens ein Auflagenocken (11) mit einer Klemm- bzw. Rastbohrung (12) zum Einstecken eines das Streckmetallgitter (4) haltenden Klemmstiftes (5) angeordnet ist.

2. Montageelement nach Anspruch 1, **dadurch gekennzeichnet**, dass beidseitig an der Befestigungslasche (9) des Montageelements (6) und parallel verlaufend Schellenbügel (8) angeordnet sind, die auf die Rohre (3) aufclipsbar sind.

3. Montageelement nach Anspruch 1, **dadurch gekennzeichnet**, dass die Schellenbügel (14, 15) am Montageelement (7) im rechten Winkel zueinander stehend angeordnet sind und die Befestigungslasche (16) ein parallel mit der Aufnahme des Schellenbügels (14) verlaufendes Langloch (17) aufweist.
